# FASCICULE DE BREVET EUROPEEN

(11) **EP 3 601 861 B1**
(45) Date de publication et mention de la délivrance du brevet: **20.10.2021**
(21) Numéro de dépôt: 18715202.0
(22) Date de dépôt: 16.03.2018
(51) Int. Cl.: F16L 7/02, F23J 13/04, F24F 13/02

(54) **DISPOSITIF D'ÉTANCHÉITÉ ENTRE DEUX CONDUITS COAXIAUX ET ASSEMBLAGE**
VORRICHTUNG ZUM ABDICHTEN ZWISCHEN ZWEI KOAXIALEN KANÄLEN UND ANORDNUNG
DEVICE FOR SEALING BETWEEN TWO COAXIAL DUCTS AND ASSEMBLY

(30) Priorité: 21.03.2017 FR 1752316
(43) Date de publication de la demande: 05.02.2020
(73) Titulaire: Rikksen, 71100 Chalon sur Saone (FR)
(72) Inventeur: IFTISSEN, Gérard, 38410 Saint Martin d'Uriage (FR)
(74) Mandataire: Casalonga
(86) Numéro de dépôt international: PCT/FR2018/050641
(87) Numéro de publication internationale: WO 2018/172673

(56) Documents cités:
- EP-A1- 1 227 202
- EP-A2- 1 422 477
- GB-A- 2 274 888
- US-A- 5 020 810
- US-A1- 2015 056 903
- US-A1- 2016 053 995

## Description

La présente invention concerne le domaine des dispositifs d'étanchéité pour établir une étanchéité entre des conduits dont l'un est engagé dans l'autre.

En particulier, la présente invention concerne le domaine des conduits verticaux de traversée de parois de bâtiments telles que des toitures ou des toitures-terrasses, notamment des conduits d'aération.

On connaît un dispositif d'étanchéité entre un conduit extérieur et un conduit intérieur, décrit dans le brevet EP 2 636 913, qui comprend une bague intérieure coulissant à l'intérieur d'un conduit extérieur et un joint annulaire interposé entre une extrémité du conduit intérieur et la bague intérieure, ce joint venant aussi en contact contre la paroi du conduit extérieur.

On connait également une bague d'étanchéité, décrite dans le brevet EP 0 999 397, qui comprend une partie annulaire de maintien engagée dans un conduit intérieur et une lèvre qui est reliée à cette partie de maintien, qui passe devant l'extrémité du conduit intérieur et qui est en contact avec la face intérieure d'un conduit extérieur.

On connait également un manchon monobloc d'étanchéité, décrit dans le brevet GB 2 274 888, qui comprend une portion cylindrique pourvue de lèvres périphériques espacées et qui comprend à une extrémité de cette portion cylindrique un prolongement cylindrique de plus grand diamètre et à l'autre extrémité de la portion cylindrique un épaulement annulaire radial intérieur. Ce manchon monobloc d'étanchéité est monté autour d'une portion d'extrémité d'un conduit et est destiné à être introduit dans un conduit extérieur de sorte que les lèvres périphériques soient en contact avec la face intérieure de ce conduit extérieur.

Selon un mode de réalisation, il est proposé un dispositif d'étanchéité qui comprend une membrane tubulaire déformable axialement, présentant une première extrémité annulaire et une seconde extrémité annulaire, une première bague annulaire d'accouplement solidaire de la première extrémité de la membrane tubulaire et présentant une aile annulaire latérale aménageant un espace annulaire axial d'accrochage ouvert axialement du côté de la seconde extrémité annulaire de la membrane tubulaire et situé radialement d'un côté latéral de la membrane tubulaire, et une seconde bague d'accouplement solidaire de la seconde extrémité de la membrane tubulaire et présentant une aile annulaire latérale en saillie s'étendant axialement à l'opposé de la première extrémité annulaire de la membrane tubulaire et décalée radialement à l'opposé dudit espace annulaire axial d'accrochage par rapport audit côté latéral de la membrane tubulaire.

Ainsi, la distance axiale entre la première bague annulaire d'accouplement et la deuxième bague annulaire d'accouplement est réglable par déformation axiale de la membrane tubulaire.

La première bague annulaire d'accouplement peut comprendre une aile annulaire intérieure, une aile annulaire extérieure décalée radialement par rapport à l'aile annulaire intérieure et une portion annulaire de liaison reliant l'aile annulaire extérieure et l'aile annulaire intérieure ;

La seconde bague annulaire d'accouplement peut comprendre une aile annulaire intérieure, une aile annulaire extérieure décalée radialement vers l'extérieur par rapport à l'aile annulaire intérieure et une portion annulaire de liaison reliant l'aile annulaire extérieure et l'aile annulaire intérieure ;

L'aile intérieure, respectivement l'aile extérieure, de la première bague annulaire d'accouplement peut être solidaire de la première extrémité de la membrane tandis que l'autre aile constitue ladite aile annulaire latérale de cette première bague annulaire d'accouplement ;

L'aile extérieure, respectivement l'aile intérieure, de la seconde bague annulaire d'accouplement peut être solidaire de la seconde extrémité de la membrane tubulaire tandis que l'autre constitue ladite aile annulaire latérale de cette seconde bague annulaire d'accouplement.

Les ailes annulaires intérieure et extérieure et la portion annulaire de liaison de la première bague annulaire d'accouplement peuvent former un U.

Les ailes annulaires intérieure et extérieure de la seconde bague annulaire d'accouplement peuvent s'étendre axialement à l'opposé l'une de l'autre et la portion annulaire de liaison de cette seconde bague annulaire d'accouplement est en forme de tronc de cône.

La première bague annulaire d'accouplement peut comprendre une aile annulaire terminale engagée dans une fente annulaire de retenue de la première extrémité annulaire de la membrane tubulaire.

Ladite aile annulaire terminale de la première bague annulaire d'accouplement peut former un crochet opposé à la seconde extrémité annulaire de la membrane tubulaire.

La première extrémité annulaire de la membrane tubulaire peut comprendre un bourrelet dans lequel est aménagée ladite fente annulaire de retenue.

La deuxième bague annulaire d'accouplement peut comprendre une aile annulaire terminale engagée dans une fente annulaire de retenue de la seconde extrémité.

Ladite aile annulaire terminale de la seconde bague annulaire d'accouplement peut former un crochet opposé à la première extrémité annulaire de la membrane tubulaire.

La seconde extrémité annulaire de la membrane tubulaire peut comprendre un bourrelet dans lequel est aménagée ladite fente annulaire de retenue.

Au moins une partie de la longueur de la membrane tubulaire peut se présenter sous la forme d'un soufflet.

Le dispositif étant apte à être accouplé à des conduits coaxiaux engagés l'un dans l'autre, ledit espace annulaire axial d'accrochage de la première bague annulaire d'accouplement peut être décalé radialement par rapport à l'aile annulaire latérale en saillie de la seconde bague d'accouplement d'une valeur au moins égale à la distance entre la face intérieure du conduit intérieur et la face extérieure du conduit extérieure.

Il est également proposé un assemblage qui comprend deux conduits coaxiaux engagés l'un dans l'autre et présentant des extrémités annulaires orientées axialement d'un même côté et distantes axialement l'une de l'autre de sorte que l'un des conduits est dépassant par rapport à l'autre conduit et qui comprend un dispositif d'étanchéité, dans lequel l'extrémité annulaire du conduit dépassant est engagée dans ledit espace annulaire d'accrochage de ladite première bague annulaire d'accouplement et l'aile annulaire latérale de ladite deuxième bague annulaire d'accouplement coopère avec l'extrémité annulaire de l'autre conduit.

L'assemblage peut comprendre des moyens pour fixer lesdites bagues annulaires d'accouplement sur lesdits conduits.

L'assemblage peut comprendre un joint annulaire d'étanchéité monté sur la première bague annulaire d'accouplement et contre lequel l'extrémité du conduit dépassant est axialement en appui et comprenant un joint annulaire d'étanchéité monté sur la deuxième bague annulaire d'accouplement et contre lequel l'extrémité de l'autre conduit est axialement en appui.

Des dispositifs d'étanchéité vont maintenant être décrits à titre d'exemples non limitatifs, illustrés par le dessin dans lequel :
- la figure 1 représente une coupe longitudinale d'un dispositif d'étanchéité installé entre des conduits coaxiaux ;
- la figure 2 représente en coupe verticale un exemple d'application du dispositif d'étanchéité de la figure 1 :
- la figure 3 représente une coupe longitudinale d'une variante de réalisation du dispositif d'étanchéité de la figure 1, installé entre des conduits coaxiaux ; et
- la figure 4 représente en coupe verticale un exemple d'application du dispositif d'étanchéité de la figure 3.

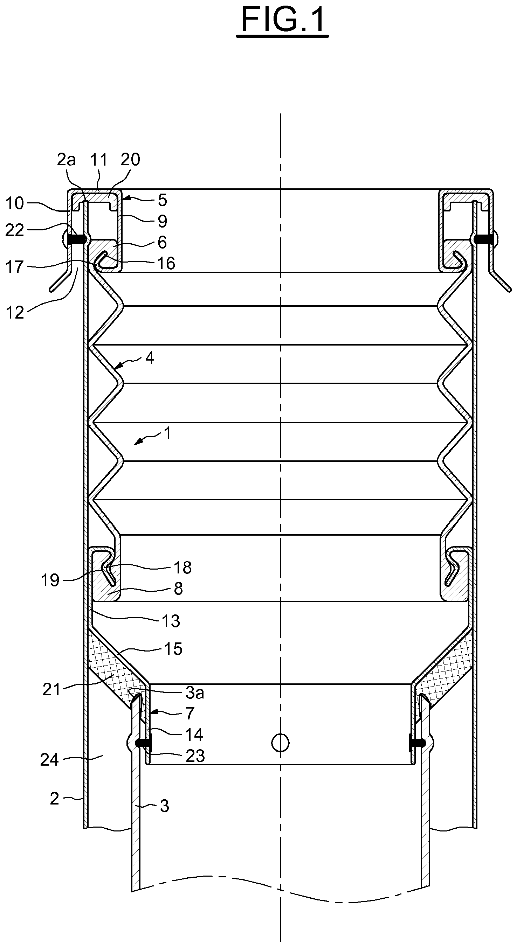

Sur la figure 1 est illustré un dispositif d'étanchéité 1 destiné à établir une liaison étanche entre deux conduits coaxiaux cylindriques 2 et 3 engagés l'un dans l'autre de sorte qu'ils présentent des extrémités annulaires 2a et 3a orientées axialement d'un même côté et situées axialement à distance l'une de l'autre, en vue de constituer un assemblage.

L'extrémité annulaire 2a du conduit extérieur 2 est au-delà de l'extrémité annulaire 3a du conduit intérieur 3 et, par conséquent, l'extrémité 3a du conduit intérieur 3 est située à l'intérieur du conduit extérieur 2 et à distance de l'extrémité 2a de ce dernier.

Le dispositif d'étanchéité 1 comprend une membrane tubulaire 4 déformable axialement, une première bague annulaire d'accouplement 5 montée sur une première extrémité annulaire 6 de la membrane tubulaire 4 et une seconde bague d'accouplement 7 montée sur une seconde extrémité annulaire 8 de la membrane tubulaire 4.

La première bague d'accouplement 5 est destinée à être accouplée à l'extrémité 2a du conduit intérieur 2.

La seconde bague d'accouplement 7 est destinée à être accouplée à l'extrémité 3a du conduit extérieur 2.

La première bague d'accouplement 5 comprend une aile annulaire intérieure 9, une aile annulaire latérale extérieure 10 décalée radialement par rapport à l'aile annulaire intérieure 9 et une portion annulaire de liaison 11 reliant l'aile annulaire intérieure 9 et l'aile annulaire extérieure 10.

L'aile intérieure 9 de la première bague d'accouplement 5 est solidaire de la première extrémité 6 de la membrane tubulaire 4 tandis que l'aile extérieure 10 s'étend en direction de la seconde extrémité 8 de la membrane tubulaire 4 en laissant subsister un espace annulaire axial d'accrochage 12 adjacent ouvert du côté de la seconde extrémité 8 de la membrane tubulaire 4.

L'espace annulaire axial d'accrochage est situé radialement du côté latéral extérieur de la membrane tubulaire 4.

L'aile intérieure 9, l'aile extérieure 10 et la portion de liaison 11 forment par exemple un profilé annulaire de section en U. L'aile intérieure 9 et l'aile extérieure 10 sont par exemple cylindriques et la portion de liaison 11 est par exemple radiale.

La seconde bague d'accouplement 7 comprend une aile annulaire extérieure 13, une aile annulaire latérale intérieure 14 décalée radialement vers l'intérieur par rapport à l'aile annulaire extérieure 13 et une portion annulaire de liaison 15 reliant l'aile annulaire extérieure 13 et l'aile annulaire intérieure 14.

L'aile extérieure 13 de la seconde bague d'accouplement 7 est solidaire de la seconde extrémité 8 de la membrane tubulaire 4 tandis que l'aile intérieure latérale 14 s'étend en saillie à l'opposé de la première extrémité 6 de la membrane tubulaire 4 et est décalée radialement vers l'intérieur à l'opposé de l'espace annulaire axial d'accrochage 12 par rapport au côté latéral extérieur de la membrane tubulaire 4.

L'aile extérieure 13, l'aile intérieure 14 et la portion de liaison 15 forment par exemple un profilé annulaire dans lequel l'aile extérieure 13 et l'aile intérieure 14 sont cylindriques et la portion de liaison 15 est un tronc de cône convergent du côté de l'aile intérieure 14.

Au moins une partie de la longueur de la membrane tubulaire 4 se présente sous la forme d'un soufflet, plié en accordéon.

Les extrémités annulaires 6 et 8 de la membrane tubulaire 4 se présentent sous la forme de bourrelets ou plis.

L'aile intérieure 9 de la première bague d'accouplement 5 est pourvue d'une aile annulaire terminale 16 repliée, sous la forme d'un crochet, entre l'aile intérieure 8 et l'aile extérieure 10 et à distance de ces dernières, en direction de la portion de liaison 11.

L'aile annulaire terminale 15 est engagée dans une fente annulaire borgne de retenue 17 aménagée dans le bourrelet formant l'extrémité 6 de la membrane tubulaire 4, de sorte à être accrochée et retenue et à constituer une liaison étanche. Cette fente annulaire borgne 17 est ouverte axialement du côté de l'extrémité 8 de la membrane tubulaire 4.

Pour son montage, le bourrelet formant l'extrémité 6 de la membrane tubulaire 4 est engagé entre l'aile annulaire terminale 16 et l'aile annulaire extérieure 10 puis accroché sur l'aile annulaire terminale 16 de la première bague d'accouplement 5.

L'espace annulaire d'accrochage 12 est ainsi déterminé entre la face extérieure du bourrelet formant l'extrémité 6 de la membrane tubulaire 4 et la face intérieure de l'aile extérieure 10 de la première bague d'accouplement 5 et est situé radialement à l'extérieur par rapport à la face latérale extérieure de la membrane tubulaire 4.

L'aile extérieure 13 de la seconde bague d'accouplement 7 est pourvue d'une aile annulaire terminale 18 repliée, sous la forme d'un crochet, en direction de la portion de liaison 15 et située à distance et à l'intérieur de l'aile extérieure 13. L'aile annulaire terminale 18 est engagée dans une fente annulaire borgne de retenue 19 aménagée dans le bourrelet formant l'extrémité 8 de la membrane tubulaire 4, de sorte à être accrochée et retenue et à constituer une liaison étanche. Cette fente borgne 19 est ouverte axialement du côté de l'extrémité 6 de la membrane tubulaire 4.

Pour son montage, le bourrelet formant l'extrémité 8 de la membrane tubulaire 4 est accroché sur l'aile annulaire terminale 19 de la seconde bague d'accouplement 7.

La première bague d'accouplement 5 est munie d'un joint annulaire radial d'étanchéité 20 fixé contre la face intérieure de sa portion annulaire radiale de liaison 11.

La seconde bague d'accouplement 7 est munie d'un joint annulaire d'étanchéité 21 fixé contre la face de sa portion annulaire inclinée de liaison 15, du côté de l'aile radiale intérieure 14.

L'aile extérieure 10 de la première bague d'accouplement 5 est munie d'une pluralité de vis radiales de maintien 22 réparties périphériquement et manœuvrables de l'extérieur.

L'aile intérieure 14 de la seconde bague d'accouplement 7 est pourvue d'une pluralité de vis radiales de maintien 23 réparties périphériquement et manœuvrables de l'intérieur.

Le dispositif d'étanchéité 1 peut être mis en place manuellement sur les conduits 2 et 3 de la manière suivante et est dimensionné pour cela. En particulier, la distance radiale entre l'espace annulaire d'accrochage 12 et la face extérieure de l'aile annulaire latérale 14 est au moins égale à la distance radiale entre la face extérieure du conduit extérieur 2 et la face intérieure du conduit intérieur 3.

On engage axialement le dispositif d'étanchéité 1 dans le conduit extérieur 2, en engageant en premier la seconde bague d'accouplement 7 en direction de l'extrémité 3a du conduit intérieur 3. La membrane tubulaire 4 est alors située à l'intérieur, son côté latéral extérieur étant à faible distance de ou en contact avec la face intérieure du conduit extérieur 2.

On engage axialement l'extrémité 2a du conduit extérieur 2 dans l'espace annulaire d'accrochage 12 de la première bague d'accouplement 5, jusqu'à ce que cette extrémité 2a du conduit extérieur 2 vienne fortement en contact contre le joint annulaire radial d'étanchéité 20 et on serre, depuis l'extérieur, les vis 22 pour qu'elles viennent fermement en appui contre la face extérieure de la portion d'extrémité du conduit extérieur 2 engagée dans l'espace annulaire 12. Ainsi, la première bague d'accouplement 5 est accouplée de façon étanche au conduit extérieur 2, par accrochage sur l'extrémité du conduit extérieur 2 située au-delà de l'extrémité du conduit intérieur 3.

Puis, on poursuit l'engagement de la seconde bague d'accouplement 7 dans le conduit extérieur 2, jusqu'à ce que l'aile intérieure latérale 14 de la seconde bague d'accouplement 7 s'engage à l'intérieur du conduit intérieur 3 et que l'extrémité 3a du conduit intérieur 3 vienne fortement en appui axialement contre le joint annulaire d'étanchéité 21. Puis, depuis l'intérieur, on serre les vis 23 pour qu'elles viennent fermement en appui contre la face intérieure de la portion d'extrémité du conduit intérieur 3. Ainsi, la seconde bague d'accouplement 7 est accouplée de façon étanche au conduit intérieur 3.

L'adaptation de la distance axiale entre la première bague d'accouplement 5 et la seconde bague d'accouplement 7 à la distance axiale entre les extrémités 2a et 3a des conduits 2 et 3 est rendue possible grâce à l'existence de la membrane tubulaire 4 déformable axialement, qui peut être axialement allongée ou raccourcie en conséquence.

Est ainsi créée une étanchéité entre le conduit extérieur 2 et le conduit intérieur 3, isolant l'espace 24 entre les conduits 2 et 3, en vis-à-vis, par rapport à l'intérieur du conduit intérieur 3 et à l'extérieur.

Selon une variante de réalisation, les vis 23 pourraient être montées sur l'aile extérieure 13 de la seconde bague d'accouplement 7 et viendrait en appui contre la face intérieure du conduit extérieur 2.

La membrane tubulaire 4 peut être en une matière caoutchouteuse ou en un élastomère spécial tel qu'un EPDM (éthylène-propylène-diène monomère). Les bagues d'accouplement 5 et 7 peuvent être métalliques, par exemple en aluminium, et peuvent être fabriquées par emboutissage ou repoussage à partir d'un disque. Les joints annulaires 20 et 21 peuvent être en une matière caoutchouteuse ou en une matière plastique.

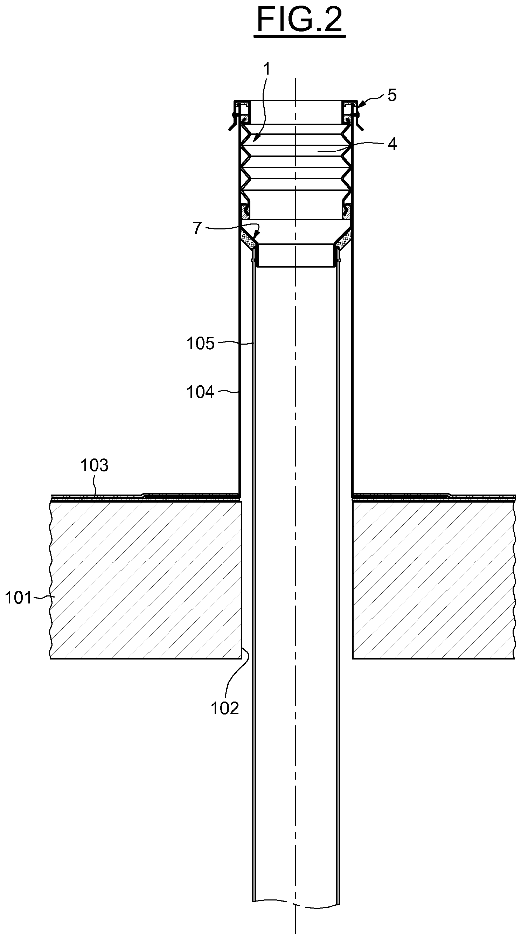

Sur la figure 2 est illustré un exemple d'application du dispositif d'étanchéité 1.

Sur cette figure 2 est représentée une paroi 101 d'un bâtiment, telle qu'une toiture ou une toiture-terrasse, en particulier une dalle, qui présente un trou traversant 102 et sur laquelle est posée une étanchéité supérieure 103 sous la forme d'une ou plusieurs couches.

La paroi 101 est équipée d'un conduit cylindrique vertical extérieur 104 qui s'étend vers le haut et dont l'extrémité inférieure est munie d'une membrane radiale périphérique intégrée à l'étanchéité supérieure 103.

Un conduit cylindrique intérieur de traversée 105 est installé verticalement au travers du trou 102 de la paroi 101 et s'étend axialement dans le conduit extérieur 104, avec un jeu. Le conduit de traversée 105 s'étend vers le bas au-dessous de la paroi 101 et vers le haut au-dessus de la paroi 101.

Le conduit extérieur 104 présente une longueur telle qu'il s'étend vers le haut au-delà de l'extrémité supérieure du conduit intérieur 105.

Le conduit extérieur 104 et le conduit intérieur 105 sont ainsi équivalents au conduit extérieur 2 et au conduit intérieur 3 de la figure 1.

Un dispositif d'étanchéité 1 tel que décrit précédemment est installé de façon équivalente entre l'extrémité supérieure du conduit extérieur 104 et l'extrémité supérieure du conduit intérieur 105.

Ainsi, le dispositif d'étanchéité 1 crée une étanchéité entre l'extérieur et les espaces entre les conduits 104 et 15, entre le trou 102 de la paroi 101 et le conduit intérieur 105 et au-dessous de la paroi 101, autour du conduit intérieur 105. En outre, l'eau peut ruisseler contre le dispositif d'étanchéité 1, vers l'extérieur du conduit extérieur 2 et vers l'intérieur du conduit intérieur 3, sans rétention ni infiltration.

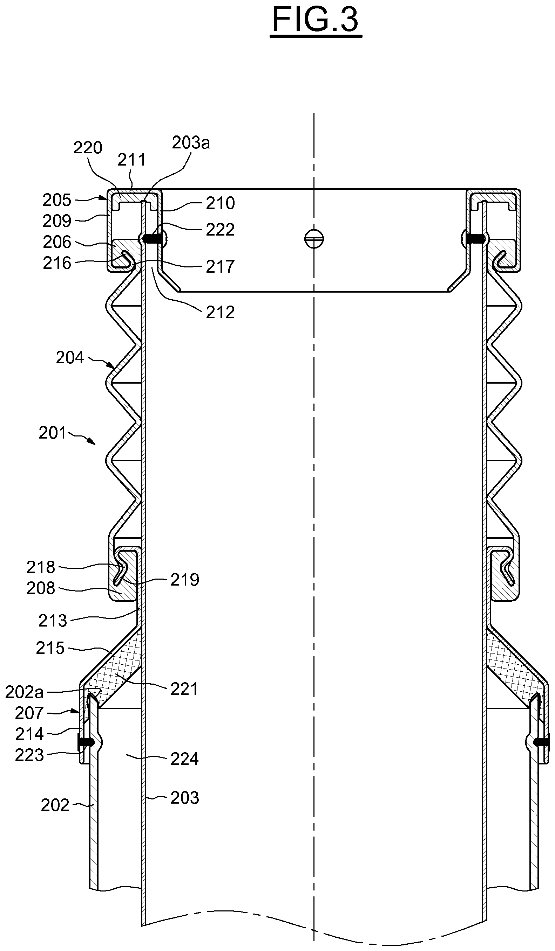

Selon une variante de réalisation illustrée sur la figure 3, un dispositif d'étanchéité 201 est destiné à établir une liaison étanche entre deux conduits coaxiaux cylindriques 202 et 203 engagés l'un dans l'autre de sorte qu'ils présentent des extrémités annulaires 202a et 203a orientées axialement d'un même côté et situées axialement à distance l'une de l'autre, en vue de constituer un assemblage.

Cette fois, l'extrémité annulaire 203a du conduit intérieur 3 est située au-delà de l'extrémité annulaire 202a du conduit extérieur 202 et, par conséquent, l'extrémité annulaire 202a du conduit extérieur 202 est située autour du conduit intérieur 203 et à distance de l'extrémité annulaire 203a de ce dernier.

Le dispositif d'étanchéité 201 présente une structure et une disposition radialement inversées par rapport au dispositif d'étanchéité 201.

Le dispositif d'étanchéité 201 comprend une membrane tubulaire 204 et des première et seconde bagues annulaires d'accouplement 205 et 207 respectivement solidaires des extrémités de la membrane tubulaire 204.

Le dispositif d'étanchéité 201 est engagé autour du conduit intérieur 203 et les bagues annulaires d'accouplement 205 et 207 sont respectivement accouplées au conduit intérieur 203 et au conduit extérieur 205. La membrane tubulaire 204 est alors située à l'extérieur et à faible distance de ou en contact avec la face intérieure du conduit intérieur 203, son côté latéral intérieur étant à faible distance de ou en contact avec la face extérieure du conduit intérieur 203.

La première bague annulaire d'accouplement 205 comprend une aile annulaire extérieure 209, une aile annulaire intérieure 210 décalée radialement par rapport à l'aile annulaire latérale intérieure 210 et une portion annulaire de liaison 211 reliant l'aile annulaire intérieure 210 et l'aile annulaire extérieure 209, en formant un U.

L'aile extérieure 209 est solidaire de l'extrémité 206 de la membrane tubulaire 204 et est pourvue d'une aile annulaire terminale 216 repliée et engagée dans une fente annulaire borgne 217 d'un bourrelet de l'extrémité 206 de la membrane tubulaire 204.

Entre l'aile intérieure 210 et le bourrelet de l'extrémité 206 de la membrane tubulaire 204 est aménagé un espace annulaire d'accrochage 212 qui est situé du côté latéral intérieur de la membrane tubulaire 204 et dans lequel est engagée l'extrémité 203a du conduit intérieur 203.

L'extrémité 203a du conduit intérieur 203 est axialement en appui contre un joint annulaire d'étanchéité 220 accolé à la face intérieure de la portion de liaison 211.

Des vis radiales de maintien 222 montées sur l'aile intérieure 210 sont en appui radial contre la face intérieure du conduit intérieur 203.

La seconde bague d'accouplement 207 comprend une aile annulaire intérieure 213, une aile annulaire extérieure latérale 214 décalée radialement vers l'extérieur par rapport à l'aile annulaire intérieure 213 et une portion annulaire de liaison 215 reliant l'aile annulaire intérieure 213 et l'aile annulaire extérieure 214 et en forme de tronc de cône.

L'aile intérieure 213 est solidaire de l'extrémité 208 de la membrane tubulaire 204 et est pourvue d'une aile annulaire terminale 218 qui est située à distance et autour de l'aile intérieure 213 et qui est engagée dans une fente annulaire de retenue 219 d'un bourrelet de l'extrémité 208 de la membrane tubulaire 204.

L'aile intérieure latérale 214 s'étend en saillie à l'opposé de la première extrémité 206 de la membrane tubulaire 204 et est décalée radialement vers l'extérieur à l'opposé de l'espace annulaire axial d'accrochage 212 par rapport au côté latéral intérieur de la membrane tubulaire 204.

La distance radiale entre l'espace annulaire d'accrochage 212 et la face intérieure de l'aile annulaire latérale 214 est au moins égale à la distance radiale entre la face extérieure du conduit extérieur 202 et la face intérieure du conduit intérieur 203.

L'aile extérieure latérale 214 est engagée à l'extérieur du conduit extérieur 202.

L'extrémité 202a du conduit extérieur 202 est axialement en appui contre un joint annulaire d'étanchéité 221 accolé à la portion de liaison 215.

Des vis radiales de maintien 223 montées sur l'aile extérieure 214 sont en appui radial contre la face extérieure du conduit extérieur 202.

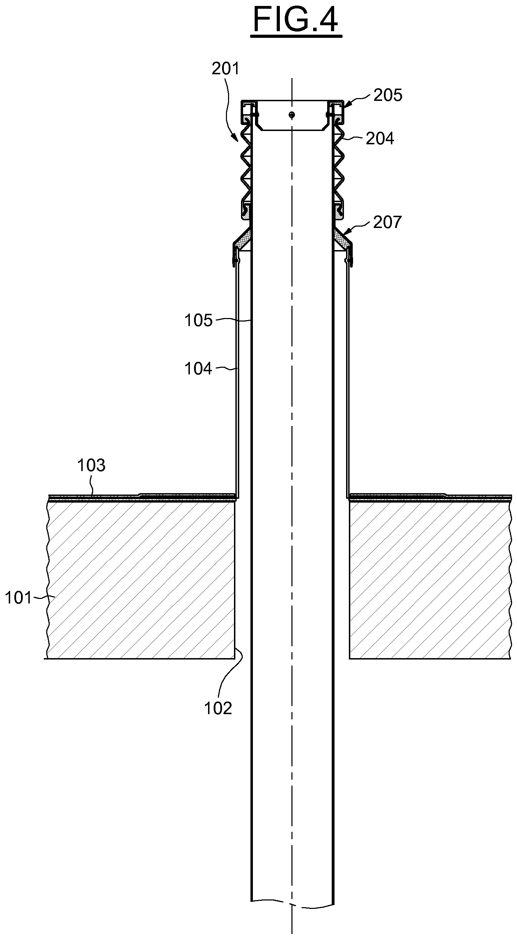

Sur la figure 4 est illustrée une application du dispositif d'étanchéité 201 de la figure 3, équivalente à celle de la figure 2.

Cette fois, l'extrémité supérieure du conduit intérieur 105, qui traverse le trou 102 de la paroi 101, est située vers le haut au-delà de l'extrémité supérieure du conduit extérieur 104 relié à l'étanchéité 103 de la paroi 101.

Le dispositif d'étanchéité 201 est engagé autour de la portion d'extrémité du conduit intérieur 105 et les bagues d'accouplement 205 et 207 sont respectivement accouplées aux extrémités des conduits intérieur et extérieur 205 et 204.

## Revendications

1. Dispositif d'étanchéité comprenant :
une membrane tubulaire (4 ; 204) présentant une première extrémité annulaire (6 ; 206) et une seconde extrémité annulaire (8 ; 208),
une première bague annulaire d'accouplement (5 ; 205) montée sur la première extrémité (6 ; 206) de la membrane tubulaire et solidaire de cette première extrémité, la première bague annulaire d'accouplement (5 ; 205) présentant une aile annulaire latérale (10 ; 210) aménageant un espace annulaire axial d'accrochage (12 ; 212) ouvert axialement du côté de la seconde extrémité annulaire de la membrane tubulaire et situé radialement d'un côté latéral de la membrane tubulaire, et
une seconde bague d'accouplement (7 ; 207) montée sur la seconde extrémité (8 ; 208) de la membrane tubulaire et solidaire de cette seconde extrémité, la seconde bague d'accouplement (7 ; 207) présentant une aile annulaire latérale (14 ; 214) en saillie s'étendant axialement à l'opposé de la première extrémité annulaire de la membrane tubulaire et décalée radialement à l'opposé dudit espace annulaire axial d'accrochage par rapport audit côté latéral de la, membrane tubulaire,
la membrane tubulaire (4 ; 204) étant déformable axialement de sorte que la distance axiale entre la première bague annulaire d'accouplement (5 ; 205) et la deuxième bague d'accouplement (7 ; 207) est réglable par déformation axiale de ladite membrane tubulaire.

2. Dispositif selon la revendication 1, dans lequel :
la première bague annulaire d'accouplement comprend une aile annulaire intérieure, une aile annulaire extérieure décalée radialement par rapport à l'aile annulaire intérieure et une portion annulaire de liaison reliant l'aile annulaire extérieure et l'aile annulaire intérieure ;
la seconde bague annulaire d'accouplement comprend une aile annulaire intérieure, une aile annulaire extérieure décalée radialement vers l'extérieur par rapport à l'aile annulaire intérieure et une portion annulaire de liaison reliant l'aile annulaire extérieure et l'aile annulaire intérieure ;
l'aile intérieure, respectivement l'aile extérieure, de la première bague annulaire d'accouplement étant solidaire de la première extrémité de la membrane tandis que l'autre aile constitue ladite aile annulaire latérale de cette première bague annulaire d'accouplement ;
l'aile extérieure, respectivement l'aile intérieure, de la seconde bague annulaire d'accouplement étant solidaire de la seconde extrémité de la membrane tubulaire tandis que l'autre constitue ladite aile annulaire latérale de cette seconde bague annulaire d'accouplement.

3. Dispositif selon la revendication 2, dans lequel les ailes annulaires intérieure et extérieure et la portion annulaire de liaison de la première bague annulaire d'accouplement forment un U.

4. Dispositif selon la revendication 2, dans lequel les ailes annulaires intérieure et extérieure de la seconde bague annulaire d'accouplement s'étendent axialement à l'opposé l'une de l'autre et la portion annulaire de liaison de cette seconde bague annulaire d'accouplement est en forme de tronc de cône.

5. Dispositif selon l'une quelconque des revendications précédentes, dans lequel la première bague annulaire d'accouplement comprend une aile annulaire terminale (16 ; 216) engagée dans une fente annulaire de retenue (17 ; 217) de la première extrémité annulaire de la membrane tubulaire.

6. Dispositif selon la revendication 5, dans lequel ladite aile annulaire terminale de la première bague annulaire d'accouplement forme un crochet opposé à la seconde extrémité annulaire de la membrane tubulaire.

7. Dispositif selon l'une des revendications 5 et 6, dans lequel la première extrémité annulaire de la membrane tubulaire comprend un bourrelet dans lequel est aménagée ladite fente annulaire de retenue.

8. Dispositif selon l'une quelconque des revendications précédentes, dans lequel la deuxième bague annulaire d'accouplement comprend une aile annulaire terminale (218 ; 219) engagée dans une fente annulaire de retenue (19 ; 219) de la seconde extrémité annulaire de la membrane tubulaire.

9. Dispositif selon la revendication 8, dans lequel ladite aile annulaire terminale de la seconde bague annulaire d'accouplement forme un crochet opposé à la première extrémité annulaire de la membrane tubulaire.

10. Dispositif selon l'une des revendications 8 et 9, dans lequel la seconde extrémité annulaire de la membrane tubulaire comprend un bourrelet dans lequel est aménagée ladite fente annulaire de retenue.

11. Dispositif selon l'une quelconque des revendications précédentes, dans lequel au moins une partie de la longueur de la membrane tubulaire (4 ; 204) se présente sous la forme d'un soufflet.

12. Dispositif selon l'une quelconque des revendications précédentes, apte à être accouplé à des conduits coaxiaux engagés l'un dans l'autre, dans lequel ledit espace annulaire axial d'accrochage (12 ; 212) de la première bague annulaire d'accouplement (5 ; 205) est décalé radialement par rapport à l'aile annulaire latérale en saillie de la seconde bague d'accouplement (7 ; 207) d'une valeur au moins égale à la distance entre la face intérieure du conduit intérieur et la face extérieure du conduit extérieure.

13. Assemblage comprenant deux conduits coaxiaux engagés l'un dans l'autre et présentant des extrémités annulaires orientées axialement d'un même côté et distantes axialement l'une de l'autre de sorte que l'un des conduits est dépassant par rapport à l'autre conduit, et comprenant un dispositif d'étanchéité (1 ; 201) selon l'une quelconque des revendications précédentes, assemblage dans lequel l'extrémité annulaire du conduit dépassant (2 ; 203) est engagée dans ledit espace annulaire d'accrochage (12) de ladite première bague annulaire d'accouplement et l'aile annulaire latérale (14 ; 214) de ladite deuxième bague annulaire d'accouplement coopère avec l'extrémité annulaire de l'autre conduit (3 ; 202).

14. Assemblage selon la revendication 13, comprenant des moyens (22, 23 ; 222, 223) pour fixer lesdites bagues annulaires d'accouplement sur lesdits conduits.

15. Assemblage selon l'une des revendications 13 et 14, comprenant un joint annulaire d'étanchéité (20 ; 220) monté sur la première bague annulaire d'accouplement et contre lequel l'extrémité du conduit dépassant est axialement en appui et comprenant un joint annulaire d'étanchéité (21 ; 221) monté sur la deuxième bague annulaire d'accouplement et contre lequel l'extrémité de l'autre conduit est axialement en appui.

## Patentansprüche

1. Vorrichtung zum Abdichten, umfassend:
eine rohrförmige Membran (4; 204), die ein erstes ringförmiges Ende (6; 206) und ein zweites ringförmiges Ende (8; 208) aufweist,
einen ersten ringförmigen Kopplungsring (5; 205), der auf dem ersten Ende (6; 206) der rohrförmigen Membran angebracht und mit diesem ersten Ende fest verbunden ist,
wobei der erste ringförmige Kopplungsring (5; 205) einen seitlichen ringförmigen Flügel (10; 210) aufweist, der einen axialen ringförmigen Rastbereich (12; 212) ausbildet, der auf der Seite des zweiten ringförmigen Endes der rohrförmigen Membran axial offen ist und sich radial auf einer seitlichen Seite der rohrförmigen Membran befindet, und
einen zweiten ringförmigen Kopplungsring (7; 207), der auf dem zweiten Ende (8; 208) der rohrförmigen Membran angebracht und mit diesem zweiten Ende fest verbunden ist, wobei der zweite ringförmige Kopplungsring (7; 207) einen hervorstehenden seitlichen ringförmigen Flügel (14; 214) aufweist, der sich axial gegenüber dem ersten ringförmigen Ende der rohrförmigen Membran erstreckt und radial gegenüber dem axialen ringförmigen Rastbereich in Bezug auf die seitliche Seite der rohrförmigen Membran versetzt ist,
wobei die rohrförmige Membran (4; 204) derart axial verformbar ist, dass der axiale Abstand zwischen dem ersten ringförmigen Kopplungsring (5; 205) und dem zweiten ringförmigen Kopplungsring (7; 207) durch axiale Verformung der ringförmigen Membran einstellbar ist.

2. Vorrichtung nach Anspruch 1, wobei:
der erste ringförmige Kopplungsring einen inneren ringförmigen Flügel, einen äußeren ringförmigen Flügel, der radial in Bezug auf den inneren ringförmigen Flügel versetzt ist, und einen ringförmigen Verbindungsabschnitt, der den äußeren ringförmigen Flügel und den inneren ringförmigen Flügel verbindet, umfasst;
der zweite ringförmige Kopplungsring einen inneren ringförmigen Flügel, einen äußeren ringförmigen Flügel, der radial nach außen in Bezug auf den inneren ringförmigen Flügel versetzt ist, und einen ringförmigen Verbindungsabschnitt, der den äußeren ringförmigen Flügel und den inneren ringförmigen Flügel verbindet, umfasst;
wobei der innere Flügel beziehungsweise der äußere Flügel des ersten ringförmigen Kopplungsrings mit dem ersten Ende der Membran fest verbunden ist, wohingegen der andere Flügel den seitlichen ringförmigen Flügel dieses ersten ringförmigen Kopplungsrings bildet;
wobei der äußere Flügel beziehungsweise der innere Flügel des zweiten ringförmigen Kopplungsrings mit dem zweiten Ende der rohrförmigen Membran fest verbunden ist, wohingegen der andere den seitlichen ringförmigen Flügel dieses zweiten ringförmigen Kopplungsrings bildet.

3. Vorrichtung nach Anspruch 2, wobei der innere und äußere ringförmige Flügel und der ringförmige Verbindungsabschnitt des ersten ringförmigen Kopplungsrings ein U bilden.

4. Vorrichtung nach Anspruch 2, wobei sich der innere und äußere ringförmige Flügel des zweiten ringförmigen Kopplungsrings axial einander gegenüber erstrecken und der ringförmige Verbindungsabschnitt dieses zweiten ringförmigen Kopplungsrings kegelstumpfförmig ist.

5. Vorrichtung nach einem der vorangehenden Ansprüche, wobei der erste ringförmige Kopplungsring einen terminalen ringförmigen Flügel (16; 216) umfasst, der in einen ringförmigen Halteschlitz (17; 217) des ersten ringförmigen Endes der rohrförmigen Membran eingreift.

6. Vorrichtung nach Anspruch 5, wobei der terminale ringförmige Flügel des ersten ringförmigen Kopplungsrings gegenüber dem zweiten ringförmigen Ende der rohrförmigen Membran einen Haken bildet.

7. Vorrichtung nach einem der Ansprüche 5 und 6, wobei das erste ringförmige Ende der rohrförmigen Membran eine Wulst umfasst, in der der ringförmige Halteschlitz eingerichtet ist.

8. Vorrichtung nach einem der vorangehenden Ansprüche, wobei der zweite ringförmige Kopplungsring einen terminalen ringförmigen Flügel (218; 219) umfasst, der in einen ringförmigen Halteschlitz (19; 219) des zweiten ringförmigen Endes der rohrförmigen Membran eingreift.

9. Vorrichtung nach Anspruch 8, wobei der terminale ringförmige Flügel des zweiten ringförmigen Kopplungsrings gegenüber dem ersten ringförmigen Ende der rohrförmigen Membran einen Haken bildet.

10. Vorrichtung nach einem der Ansprüche 8 und 9, wobei das zweite ringförmige Ende der rohrförmigen Membran eine Wulst umfasst, in der der ringförmige Halteschlitz eingerichtet ist.

11. Vorrichtung nach einem der vorangehenden Ansprüche, wobei mindestens ein Teil der Länge der rohrförmigen Membran (4; 204) in Form eines Balgs vorliegt.

12. Vorrichtung nach einem der vorangehenden Ansprüche, die imstande ist, an koaxiale Kanäle gekoppelt zu sein, die ineinander eingreifen, wobei der axiale ringförmige Rastbereich (12; 212) des ersten ringförmigen Kopplungsrings (5; 205) in Bezug auf den hervorstehenden seitlichen ringförmigen Flügel des zweiten Kopplungsrings (7; 207) um einen Wert radial versetzt ist, der mindestens gleich dem Abstand zwischen der inneren Fläche des inneren Kanals und der äußeren Fläche des äußeren Kanals ist.

13. Anordnung, die zwei koaxiale Kanäle umfasst, die ineinander eingreifen und ringförmige Enden aufweisen, die axial zu einer gleichen Seite ausgerichtet sind und axial voneinander derart beabstandet sind, dass der eine der Kanäle in Bezug auf den anderen Kanal überstehend ist, und eine Vorrichtung zum Abdichten (1; 201) nach einem der vorangehenden Ansprüche umfasst, wobei bei der Anordnung das ringförmige Ende des überstehenden Kanals (2; 203) in den ringförmigen Rastbereich (12) des ersten ringförmigen Kopplungsrings eingeführt ist und der seitliche ringförmige Flügel (14; 214) des zweiten ringförmigen Kopplungsrings mit dem ringförmigen Ende des anderen Kanals (3; 202) zusammenwirkt.

14. Anordnung nach Anspruch 13, die Mittel (22, 23; 222, 223) zur Befestigung der ringförmigen Rastringe auf den Kanälen umfasst.

15. Anordnung nach einem der Ansprüche 13 und 14, die eine ringförmige Dichtung (20; 220) umfasst, die auf dem ersten ringförmigen Kopplungsring angebracht ist und auf der sich das Ende des überstehenden Kanals axial abstützt und eine ringförmige Dichtung (21; 221) umfasst, die auf dem zweiten ringförmigen Kopplungsring angebracht ist und auf der sich das Ende des anderen Kanals axial abstützt.

## Claims

1. Sealing device comprising:
a tubular membrane (4; 204) having a first annular end (6; 206) and a second annular end (8; 208),
a first annular coupling ring (5; 205) mounted on the first end (6; 206) of the tubular membrane and secured to this first end, the first annular coupling ring (5; 205) having a lateral annular flange (10; 210) providing an axial annular attachment space (12; 212) open axially on the same side as the second annular end of the tubular membrane and located radially on a lateral side of the tubular membrane, and
a second coupling ring (7; 207) mounted on the second end (8; 208) of the tubular membrane and secured to this second end, the second coupling ring (7; 207) having a projecting lateral annular flange (14; 214) extending axially opposite the first annular end of the tubular membrane and offset radially opposite said axial annular attachment space with respect to said lateral side of the tubular membrane,
the tubular membrane (4; 204) being axially deformable so that the axial distance between the first annular coupling ring (5; 205) and the second coupling ring (7; 207) is adjustable by axial deformation of said tubular membrane.

2. Device according to claim 1, wherein:
the first annular coupling ring comprises an inner annular flange, an outer annular flange offset radially with respect to the inner annular flange and an annular connection portion connecting the outer annular flange and the inner annular flange;
the second annular coupling ring comprises an inner annular flange, an outer annular flange offset radially outwards with respect to the inner annular flange and an annular connection portion connecting the outer annular flange and the inner annular flange;
the inner flange or respectively the outer flange of the first annular coupling ring being secured to the first end of the membrane while the other flange constitutes said lateral annular flange of this first annular coupling ring;
the outer flange, or respectively the inner flange, of the second annular coupling ring being secured to the second end of the tubular membrane while the other constitutes said lateral annular flange of this second annular coupling ring.

3. Device according to claim 2, wherein the inner and outer annular flanges and the annular connection portion of the first annular coupling ring form a U.

4. Device according to claim 2, wherein the inner and outer annular flanges of the second annular coupling ring extend axially opposite each other and the annular connection portion of this second annular coupling ring is in the form of a truncated cone.

5. Device according to any one of the preceding claims, wherein the first annular coupling ring comprises a terminal annular flange (16; 216) engaged in an annular retaining slot (17; 217) of the first annular end of the tubular membrane.

6. Device according to claim 5, wherein said terminal annular flange of the first annular coupling ring forms a hook opposite to the second annular end of the tubular membrane.

7. Device according to one of claims 5 and 6, wherein the first annular end of the tubular membrane comprises a rim wherein said annular retaining slot is provided.

8. Device according to any one of the preceding claims, wherein the second annular coupling ring comprises a terminal annular flange (218; 219) engaged in an annular retaining slot (19; 219) of the second annular end of the tubular membrane.

9. Device according to claim 8, wherein said terminal annular flange of the second annular coupling ring forms a hook opposite to the first annular end of the tubular membrane.

10. Device according to one of claims 8 and 9, wherein the second annular end of the tubular membrane comprises a rim wherein said annular retaining slot is provided.

11. Device according to any one of the preceding claims, wherein at least part of the length of the tubular membrane (4; 204) is in the form of a bellows.

12. Device according to any one of the preceding claims, able to be coupled to coaxial ducts engaged one in the other, wherein said axial annular attachment space (12; 212) of the first annular coupling ring (5; 205) is offset radially with respect to the projecting lateral annular flange of the second coupling ring (7; 207) by an amount at least equal to the distance between the inner face of the inner duct and the outer face of the outer duct.

13. Assembly comprising two coaxial ducts engaged one in the other and having annular ends oriented axially on the same side and axially distant from each other so that one of the ducts projects with respect to the other duct, and comprising a sealing device (1; 201) according to any one of the preceding claims, an assembly wherein the annular end of the projecting duct (2; 203) is engaged in said annular attachment space (12) of said first annular coupling ring and the lateral annular flange (14; 214) of said second annular coupling ring cooperates with the annular end of the other duct (3; 202).

14. Assembly according to claim 13, comprising means (22, 23; 222, 223) for attaching said annular coupling rings to said ducts.

15. Assembly according to one of claims 13 and 14, comprising an annular seal (20; 220) mounted on the first annular coupling ring and against which the end of the projecting duct is axially in abutment and comprising an annular seal (21; 221) mounted on the second annular coupling ring and against which the end of the other duct is axially in abutment.
